(19) Europäisches Patentamt
European Patent Office
Office européen des brevets

(11) **EP 2 475 171 A1**

(12) **EUROPEAN PATENT APPLICATION**
published in accordance with Art. 153(4) EPC

(43) Date of publication:
**11.07.2012 Bulletin 2012/28**

(51) Int Cl.:
***H04N 7/26*** *(2006.01)*

(21) Application number: **09849008.9**

(22) Date of filing: **28.09.2009**

(86) International application number:
**PCT/JP2009/066832**

(87) International publication number:
**WO 2011/027479 (10.03.2011 Gazette 2011/10)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **02.09.2009 PCT/JP2009/065356**

(71) Applicant: **Kabushiki Kaisha Toshiba
Minato-ku
Tokyo 105-8001 (JP)**

(72) Inventors:
• **KOTO, Shinichiro**
  **(JP)**
• **DATE, Naoto**
  **(JP)**

(74) Representative: **Henkel, Breuer & Partner
Patentanwälte
Maximiliansplatz 21
80333 München (DE)**

(54) **IMAGE TRANSMITTING DEVICE AND IMAGE RECEIVING DEVICE**

(57) An image transmitting device (100) comprises a video processing unit (102) and an output unit (103). The video processing unit (102) applies either one of a plurality of video processes to the image af a predetermined unit and generates video data. The output unit (103) ouputs transmission data including: the frame number of the image of the predetermined unit; the coordinate information of the image of the predetermined unit; information for identifying whether the video data are subsampled or not; the image phase information of the video data when a subsampling process is performed on the video data; information for identifying whether the video data are compressed or not; the size information of the video data; and the video data.

FIG. 1

EP 2 475 171 A1

**Description**

Technical Field

The present invention relates to transmission and reception of images.

Background Art

In order to transmit high-definition video data with high quality on real time within a limited transmission band, such as a wireless band, there is a need for low-latency image compression/decompression technique with capability to follow changing transmission rate and with robustness against transmission errors.

A video-data processing apparatus described in a patent document 1 subsamples an image in accordance with pixel phases to separate the image into a plurality of subsampled images, and compresses the plurality of subsampled images. According to this video-data processing apparatus, errors can be concealed based on remaining normal subsampled images even when part of the plurality of subsampled images has been lost due to some errors.

In an image communication method described in a patent document 2, images are subjected to variable-length compression in units of blocks, and compressed data of each block is transmitted, added with a size of the compressed data. According to this method, a receiving side knows a position of the compressed data of each block in advance, and random access is therefore possible. That is, this image communication method can reduce a propagation range of transmission errors to a block level.

Prior Art Document

Patent Document

Patent document 1: Jpn. Pat. Appln. KOKAI. Publication No. H06-22288

Patent document 2: Jpn. Pat. Appln. KOKAI Publication No. H11-18086

Disclosure of Invention

Object of the Invention

The video data processing apparatus described in the patent document 1 does not assume wireless transmission of video data. When video data is wirelessly transmitted, a transmission environment including a transmission error rate changes moment by moment. In general, a subsampling processing deteriorates spatial correlation of an image, and therefore decreases efficiency of image compression which utilizes spatial directional prediction. Therefore, the subsampling processing is adequate for a transmission environment at a high transmission error rate although the subsampling processing is not always adequate for a transmission environment with a low transmission error rate. Since the video-data processing apparatus performs a subsampling processing even at a low transmission error rate, the video-data processing apparatus is inadequate for image compression of high efficiency. Error concealment based on the subsampling processing does not function in a transmission environment in which the transmission error rate is remarkably high (as to make most of a plurality of subsampled images have been lost).

In the image communication method described in the patent document 2, a compressed data size for each block is stored in data to be transmitted. Therefore, a large amount of information is required for describing the compressed data sizes. Further, when an error occurs in an area of describing such a compressed data size, random access to compressed data in a corresponding block fails, and the error may propagates over a block level.

Accordingly, the present invention aim to present a technique of image transmission / image reception in order to stably transmit a high quality video with respect to a variation of transmission environment.

Means for Solving the Object

An image transmission apparatus according to an aspect of the invention, includes: a division module configured to divide an input image into at least one predetermined unit images; a video processor configured to generate video data by applying one of first to fourth video processing to the predetermined unit image, the first to fourth video processing being (a) the first video processing of generating the predetermined unit image as the video data, (b) the second video processing of generating the video data by compressing the predetermined unit image, (c) the third video processing of performing a subsampling processing of performing pixel-separation of the predetermined unit image into subsampled images in accordance with pixel phases, and of generating each of the subsampled images as the video data, and (d) the fourth video processing of performing the subsampling processing of separating the predetermined unit image into the subsampled images in accordance with pixel phases, and of generating the video data by compressing each of the subsampled images; and an output module configured to output transmission data comprising a frame number of the predetermined unit image, coordinate information of the predetermined unit image, information for identifying whether the video data has been subsampled or not, pixel phase information of the video data when the subsampling processing has been performed on the video data, information for identifying whether the video data has been compressed or not, size information of the video data, and the video data.

An image reception apparatus according to another aspect of the invention, includes: an input module configured to input transmission data comprising a frame number of a predetermined unit image, coordinate information of the predetermined unit image, information for identifying whether video data has been subsampled or not, pixel phase information of the video data when a subsampling processing has been performed on the video data, information for identifying whether the video data has been compressed or not, size information of the video data, and the video data; an extraction module configured to extract the video data from the transmission data, in accordance with the size information of the video data; a decompression module configured to decompresses the video data when the information for identifying whether the video data has been compressed or not indicates that a compression processing has been performed on the video data; an inverse subsampling module configured to reconstruct the predetermined unit image by performing an inverse subsampling processing on the video data in accordance with the pixel phase information when the information for identifying whether the video data has been subsampled or not indicates that the subsampling processing has been performed on the video data; a display-area determination module configured to determine a display area of the predetermined unit image, based on the coordinate information of the predetermined unit image; and a display-order determination module configured to determine a display frame of the predetermined unit image, based on the frame number of the predetermined unit image.

An image transmission apparatus according to another aspect of the invention, includes: an image input module configured to input a predetermined unit image obtained by dividing an input image; a format converter configured to perform reduction conversion in horizontal direction for each signal component of the predetermined unit image; a pixel separation module configured to perform pixel separation in horizontal direction on the predetermined unit image subjected to the reduction conversion; a compression module configured to obtain compressed image data by compressing the predetermined unit image subjected to the pixel separation, independently for each separated pixel phase; a packetizing module configured to packetize the compressed image data; and a transmitter configured to transmit packetized compressed image data, wherein the apparatus transmits (1) the compressed image data, (2) information of a color space of the input image, (3) information of a horizontal reduction rate for the compressed image data, (4) information of a pixel separation type for the compressed image data, and (5) information of a pixel separation phase for the compressed image data.

An image reception apparatus according to another aspect of the invention, includes: a receiver configured to receive a plurality of packets comprising (1) compressed image data of a predetermined unit image obtained by dividing an input image or an image obtained by performing pixel separation in horizontal direction on the predetermined unit image, (2) information of a color space of the input image, (3) information of a horizontal reduction rate for the compressed image data, (4) information of a pixel separation type for the compressed image data, and (5) information of a pixel separation phase for the compressed image data; a depacketizing module configured to extract the information (1) to (5) from the plurality of packets; a decompression module configured to decompress the compressed image data; a pixel composition module configured to perform horizontal pixel composition of decompressed images, in accordance with the information of the pixel separation type and the information of the pixel separation phase; a format converter configured to horizontally enlarge an image obtained by the horizontal pixel composition in accordance with the information of the horizontal reduction rate, for each signal component; and an image output module configured to output an image subjected to format conversion.

An image transmission apparatus according to another aspect of the invention, includes: a division module configured to divide an input image frame into units of slices; a compression module configured to generate compressed image data by performing closed compression for each of the units of slices; a packetizing module configured to packetize (1) the compressed image data, (2) color space information indicating which of RGB, YCbCr444, and YCbCr422 a color space of the input image frame is, (3) frame size information of the input image frame, (4) separation information indicating whether each of the slices is a predetermined unit image in the input image frame or one of two partitions into which the predetermined unit image has been separated, (5) frame number information indicating a frame number to which each of the slices belongs, (6) display position information indicating a position where each of the slices is to be displayed in the frame, (7) pixel-separation type information indicating which of pixel separation modes bases the partition which each of the slices is, the pixel separation modes being (A) a pixel separation mode of separating the predetermined unit image into pixels in even-numbered columns and odd-numbered columns, (B) a pixel separation mode of separating the predetermined unit image into pixels in first and second phases of a checker board pattern, and (C) a pixel separation mode of separating the predetermined unit image into a left half image and a right half image, (8) partition number information indicating which one of the two partitions each of the slices is, and (9) horizontal subsampling-rate information indicating a horizontal subsampling rate of each signal component of the predetermined unit image, to generate a packetized data signal; and a transmitter configured to OFDM-modulate the packetized data signal and transmit the packetized data signal on a wireless transmission channel within a frequency range of 57 GHz to 66 GHz.

An image reception apparatus according to another aspect of the invention, includes: a receiver configured to receive a plurality of packet data by OFDM-demodulating a packetized data signal received on a wireless transmission channel within a frequency range of 57 GHz to 66 GHz; a depacketizing module configured to depacketize (1) image data compressed in units of slices, (2) color space information indicating which of RGB, YCbCr444, and YCbCr422 a color space of a frame of the image data is, (3) frame size information of the frame, (4) separation information indicating whether each of the slices is a predetermined unit image in the frame or one of two partitions into which the predetermined unit image has been separated, (5) frame number information indicating a frame number of the frame to which each of the slices belongs, (6) display position information indicating a position where each of the slices is to be displayed in the frame, (7) pixel-separation type information indicating which of pixel separation modes bases the partition which each of the slices is, the pixel separation modes being (A) a pixel separation mode of separating the predetermined unit image into pixels in even-numbered columns and odd-numbered columns, (B) a pixel separation mode of separating the predetermined unit image into pixels in first and second phases of a checker board pattern, and (C) a pixel separation mode of separating the predetermined unit image into a left half image and a right half image, (8) partition number information indicating which one of the two partitions each of the slices is, and (9) horizontal subsampling-rate information indicating a horizontal subsampling rate of each signal component of the predetermined unit image; and a reconstruction module configured to decompresses the image data and reconstruct the predetermined unit image, based on the information (1) to (9).

Effect of the Invention

According to the present invention, a technique of image transmission / image reception in order to stably transmit a high quality video with respect to a variation of transmission environment can be provided.

Brief Description of the Drawings

FIG. 1 is a block diagram showing an image transmission apparatus according to the first embodiment;
FIG. 2 is a block diagram showing details of a video processor 102 in FIG. 1;
FIG. 3 is a block diagram showing an image reception apparatus according to the first embodiment;
FIG. 4 is a block diagram showing an image transmission apparatus according to the second embodiment;
FIG. 5 is a block diagram showing an image reception apparatus according to the second embodiment;
FIG. 6 is a block diagram showing an image transmission apparatus according to the third embodiment;
FIG. 7 is a block diagram showing an image reception apparatus according to the third embodiment;
FIG. 8 is a diagram for explaining a predetermined unit image according to the first embodiment;
FIG. 9A is a view for explaining a subsampling processing performed by a third video processor 203 and a fourth video processor 204;
FIG. 9B is a view for explaining a subsampling processing performed by the third video processor 203 and fourth video processor 204;
FIG. 10 is a diagram showing an example of transmission data according to the first embodiment;
FIG. 11A is a view for explaining an inverse subsampling processing performed by an inverse subsampling module 304;
FIG. 11B is a view for explaining the inverse subsampling processing performed by the inverse subsampling module 304;
FIG. 12 is a diagram showing an example of transmission data according to the second embodiment;
FIG. 13 is a diagram showing an example of transmission data according to the third embodiment;
FIG. 14 is a diagram showing an example of transmission data according to the fourth embodiment;
FIG. 15 is a block diagram showing an image transmission apparatus according to the fifth embodiment;
FIG. 16 is a block diagram showing an image reception apparatus according to the fifth embodiment;
FIG. 17 is a diagram showing an example of a transmission data structure according to the fifth embodiment;
FIG. 18 is a table showing an example of a slice header according to the fifth embodiment;

FIG. 19 is a table showing an example of information of a pixel separation type according to the fifth embodiment;

FIG. 20 is a table showing an example of information of a reduction rate according to the fifth embodiment;

FIG. 21 is a diagram showing an example of pixel separation according to the fifth embodiment;

FIG. 22 is a diagram showing an example of pixel separation according to the fifth embodiment;

FIG. 23 is a diagram showing an example of pixel separation according to the fifth embodiment;

FIG. 24 is a table showing an example of a slice identifier according to the fifth embodiment;

FIG. 25 is a table showing an example of information of a transmission image format, according to the fifth embodiment;

FIG. 26 is a table showing an example of information of color spaces, according to the fifth embodiment;

FIG. 27 is a table showing an example of information indicating valid/invalid of pixel separation, according to the fifth embodiment;

FIG. 28 is a table showing an example of color spaces of compressed data, according to the fifth embodiment;

FIG. 29 is a table showing an example of a block number coefficient of compressed data, according to the fifth embodiment;

FIG. 30 is a block diagram showing an example of a pixel composition module 25;

FIG. 31 is a graph for explaining effects of pixel separation according to the fifth embodiment;

FIG. 32A is a view for explaining effects of pixel separation according to the fifth embodiment;

FIG. 32B is a view for explaining effects of pixel separation according to the fifth embodiment; and

FIG. 33 is a view for explaining effects of reduction conversion according to the fifth embodiment.

Best Mode for Carrying Out the Invention Hereinafter, embodiments of the invention will be described with reference to the drawings. A term of "image-compression/decompression" in this description of the present application may be understood to be substitutive with a term "image-encoding/decoding".

First Embodiment

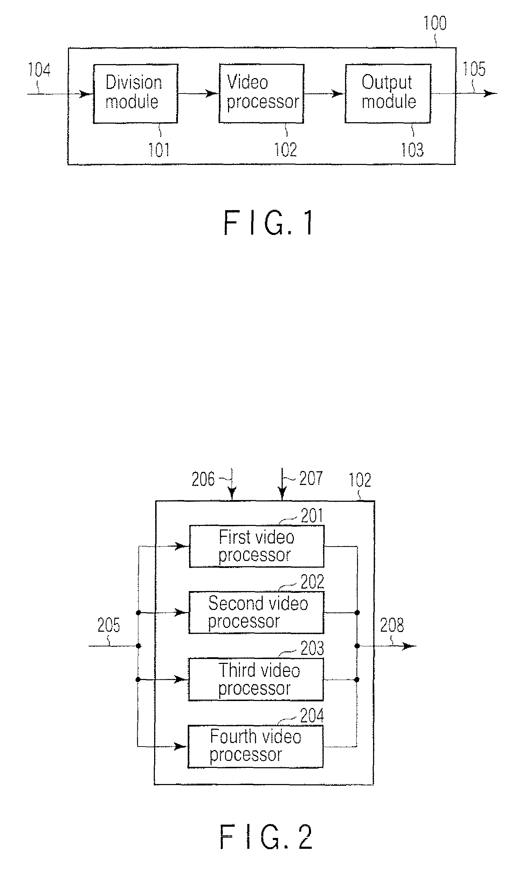

As shown in FIG. 1, an image transmission apparatus 100 according to the first embodiment of the invention comprises a division module 101, a video processor 102, and an output module 103. The image transmission apparatus 100 generates transmission data 105 from an input image 104.

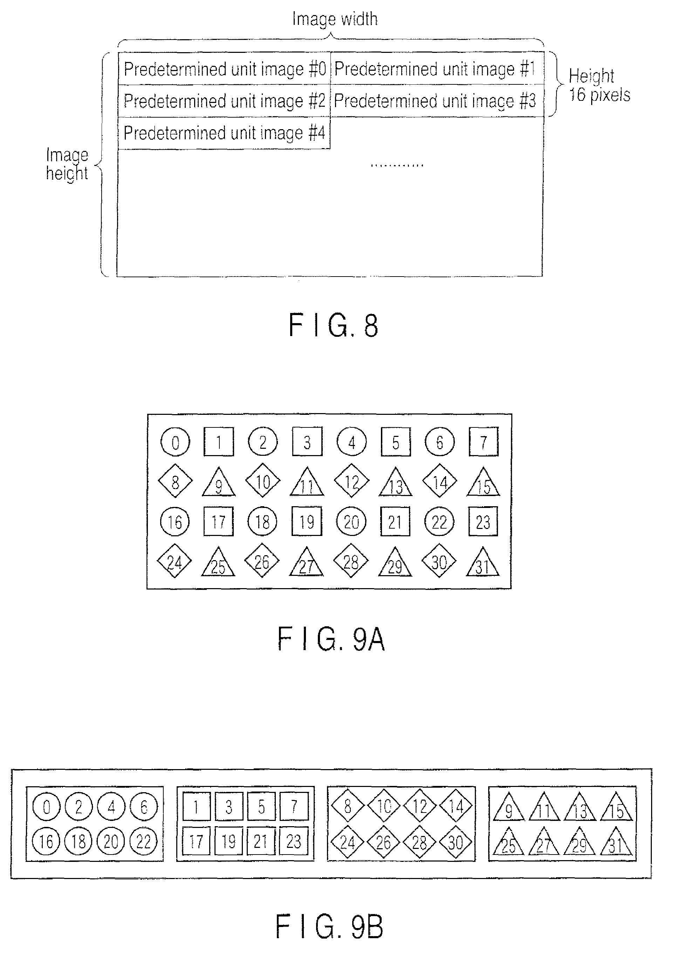

The division module 101 divides the input image 104 into predetermined unit images. Here, the input image 104 is, for example, an image corresponding to one frame included in a video as a target to transmission. The division module 101 spatially divides the input image 104. The division module 101 divides the input image 104 into a plurality of predetermined unit images, for example, as shown in FIG. 8. In FIG. 8, each predetermined unit image is a set of pixels included in an area which is as wide as a half of one frame and as high as sixteen pixels. The predetermined unit images are not limited to those shown in FIG. 8. The division module 101 inputs the predetermined images, frame numbers of the predetermined unit images, and coordinate information items of the predetermined unit images, to the video processor 102. The frame numbers are used to identify frames (i.e., time positions) to which the predetermined unit images respectively belong, and the coordinate information items are used to identify areas (spatial positions) which the predetermined unit images respectively occupy in a frame.

The video processor 102 applies one of first to fourth video processing described later to each predetermined unit image, to generate video data. Depending on a transmission rate and a transmission error rate, the video processor 102 selects and applies one of the first to fourth video processing to each predetermined unit image. Selection of the video processing in the video processor 102 may be performed either before or after application of the first to fourth video processing. The transmission rate and transmission error rate may be obtained by an arbitrary conventional method.

As shown in FIG. 2, the video processor 102 comprises a first video processor 201, a second video processor 202, a third video processor 203, and a fourth video processor 204.

The first video processor 201 performs a first video processing on a predetermined unit image 205. The first video processing includes neither a compression processing nor a subsampling processing for the predetermined unit image 205. Specifically, the first video processor 201 generates video data 208 directly from the predetermined unit image 205. The video data 208 generated by the first video processing contains a large amount of data and has a low error robustness. Therefore, the first video processing is adequate for a transmission environment in which the transmission rate 206 is high and the transmission error rate 207 is low.

The second video processor 202 performs a second video processing on the predetermined unit image 205. The second video processor 202 generates video data 208 by performing a compression processing on the predetermined unit image 205. The second video processing includes no subsampling processing. An arbitrary compression scheme and an arbitrary compression rate may be employed in the second video processing. The video data 208 generated by the second video processing contains a small amount of data and has a low error robustness. Therefore, the second video processing is adequate for a transmission environment in which the transmission rate 206 and the transmission error rate 207 are both low.

The third video processor 203 performs a third video processing on the predetermined unit image 205. The third video processing includes a subsampling processing on the predetermined unit image 205. Specifically, the third video processor 203 separates pixels in the predetermined unit image 205 into a plurality of subsampled images in accordance with pixel phases, and generates each of the subsampled images as video data 208. The third video processing includes no compression processing. An arbitrary subsampling processing scheme may be employed in the third video processing. The video data 208 generated by the third video processing contains a large amount of data and has a high error robustness. Therefore, the third video processing is adequate for a transmission environment in which the transmission rate 206 and the transmission error rate 207 are both high.

The fourth video processor 204 performs a fourth video processing on the predetermined unit image 205. The fourth video processing includes a subsampling processing and a compression processing on the predetermined unit image 205. Specifically, the fourth video processor 204 separates pixels in the predetermined unit image 205 into a plurality of subsampled images in accordance with pixel phases, and performs the compression processing for each of the subsampled images to outputs video data 208. An arbitrary subsampling processing scheme, an arbitrary compression scheme, and an arbitrary compression rate may be employed in the fourth video processing. The video data 208 generated by the fourth video processing contains a small amount of data and has a high error robustness. Therefore, the fourth video processing is adequate for a transmission environment in which the transmission rate 206 is low and the transmission error rate 207 is high.

The subsampling processing has been described to be adequate for a transmission environment with a high transmission error rate 207. However, when the transmission error rate 207 is remarkably high, there is a risk that error concealment based on the subsampling processing does not function in a receiving side. In this case, the video processor 102 may apply a video processing, assuming retransmission of data. For example, the video processor 102 may generate video data 208 by performing the second or fourth video processing at a higher compression rate than usual and may temporarily store the video data 208 in an buffer (not shown) for subsequent retransmission.

Hereinafter, a specific example of the subsampling processing in the third and fourth video processing will be described. The third video processor 203 and fourth video processor 204 each may employ any one fixed subsampling processing or may adaptively select and employ one of a plurality of subsampling processing. When a plurality of subsampling processing are made switchable, information for identifying an applied subsampling processing may be stored in the transmission data 105 (described later).

For example, as shown in FIGS. 9A and 9B, in the subsampling processing, four subsampled images may be generated by separating pixels in a predetermined unit image in horizontal and vertical directions for even and odd properties. In other words, the generated subsampled images are: a subsampled image formed of pixels at intersection points between odd-numbered horizontal lines and odd-numbered vertical columns; a subsampled image formed of pixels at intersection points between odd-numbered horizontal lines and even-numbered vertical columns; a subsampled image formed of pixels at intersection points between even-numbered horizontal lines and odd-numbered vertical columns; and a subsampled image formed of pixels at intersection points between even-numbered horizontal lines and even-numbered vertical columns. Alternatively, the subsampling processing may be regarded as separating pixels in accordance with relative positions in each $2 \times 2$ unit pixel block to generate four subsampled images. FIG. 9A shows a predetermined unit image before the subsampling processing. In FIG. 9A, pixels at intersection points between odd-numbered horizontal lines and odd-numbered vertical columns are represented by triangle marks. Pixels at intersection points between odd-numbered horizontal lines and even-numbered vertical columns are represented by rhombus marks. Pixels at intersection points between even-numbered horizontal lines and odd-numbered vertical columns are represented by as square marks. Pixels at intersection points between even-numbered horizontal lines and even-numbered vertical columns are represented by circle marks. In FIG. 9A, coordinates of pixel 0 are (0, 0), and coordinates of pixel 31 are (7, 3). When the predetermined unit image shown in FIG. 9A is subsampled in accordance with rules as described above, four subsampled images shown in FIG. 9B are generated. In FIGS. 9A and 9B, identical reference symbols are assigned to identical pixels, respectively.

In the subsampling processing, two subsampled images may be generated by separating pixels in a predetermined unit image in a horizontal, vertical, or diagonal (checker board type) direction for even and odd properties.

To the output module 103, the video processor 102 inputs, a frame number of the predetermined unit image, coordinate information of the predetermined unit image, information for identifying subsampled/non-subsampled, pixel phase information, and information for identifying compressed/uncompressed, along with the video data 208 obtained by applying one of the first to fourth video processing. The information for identifying subsampled/non-subsampled indicates whether a subsampling processing has been performed to generate the video data 208. When a plurality of subsampling processing are switched, the information for identifying subsampled/non-subsampled includes identification information for each of the subsampling processing. The pixel phase information indicates a subsampled image expressed by the video data 208 when the subsampling processing has been performed. The information for identifying compressed/uncompressed indicates whether or not a compression processing has been performed to generate the video data 208.

The size information of the video data 208 indicates, for example, a total size of the video data 208.

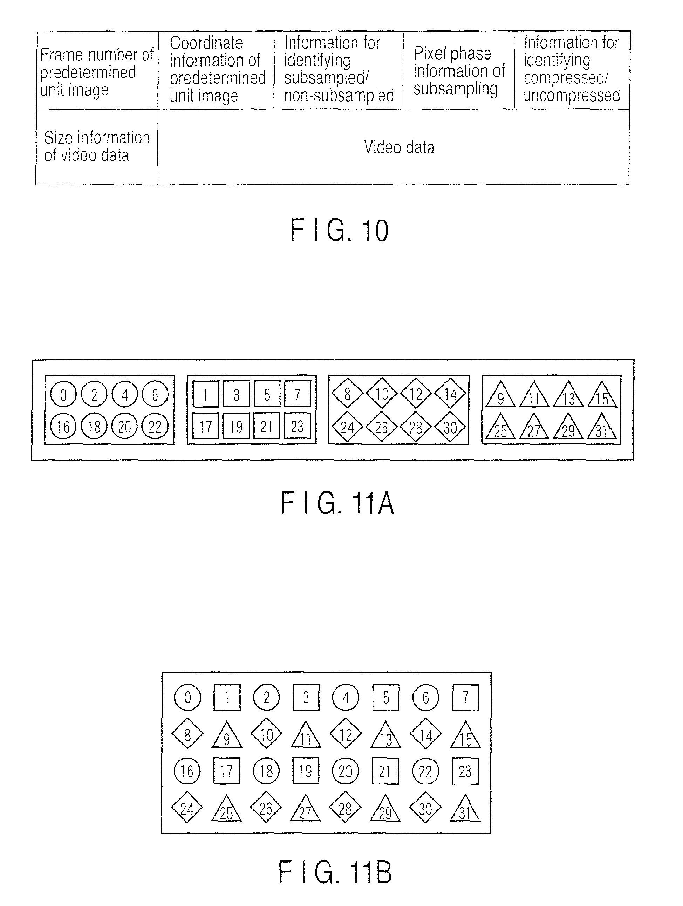

The output module 103 generates transmission data 105 by arranging a format of the data from the video processor 102, and outputs the transmission data 105. The transmission data 105 is transmitted to an image reception apparatus through a transmission channel (for example, a wireless transmission channel) at a transmission rate and a transmission error rate which vary over time. The format of the transmission data 105 is, for example, as shown in FIG. 10. In the format shown in FIG. 10, positions of fields may be appropriately changed, and information not shown in the figure may be added.

As has been described above, the image transmission apparatus according to the present embodiment switches application/non-application of video processing such as a compression processing and a subsampling processing, based on the transmission rate and transmission error rate which vary over time. Therefore, the image transmission apparatus according to the present embodiment can stably transmit high-quality videos even when the transmission rate or transmission error rate varies.

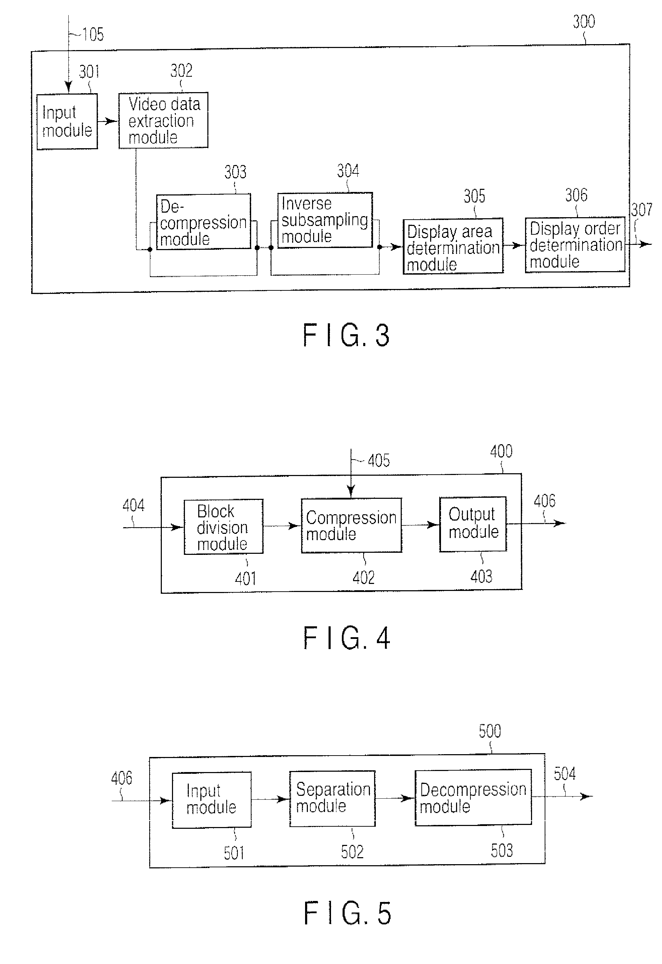

As shown in FIG. 3, an image reception apparatus 300 according to the present embodiment comprises an input module 301, a video data extraction module 302, a decompression module 302, an inverse subsampling module, a display-area determination module 305, and a display-order determination module 306. The image reception apparatus 300 generates an output video 307 from the transmission data 105. The transmission data 105 is transmitted from the image transmission apparatus 100 shown in FIG. 1 through, for example, a wireless transmission channel.

The input module 301 inputs the transmission data 105 to the video-data extraction module 302. When the input module 301 detects an error in the transmission data 105, the input module 301 may request the transmitting side (e.g., an image transmission apparatus 100) to retransmit part or all of the transmission data 105. To detect an error, for example, an existing error correction code may be used.

The video-data extraction module 302 extracts video data 208 from the transmission data 105 in accordance with the size information of the video data included in the transmission data 105. When the information for identifying compressed/uncompressed in the transmission data 105 indicates that a compression processing has been performed on the video data 208, the video data 208 is input to the decompression module 302. Otherwise, when the information for identifying compressed/uncompressed in the transmission data 105 indicates that no compression processing has been performed on the video data 208 and when the information for identifying subsampled/non-subsampled in the transmission data 105 indicates that a subsampling processing has been performed on the video data 208, the video data 208 is input to the inverse subsampling module 304. Still otherwise, when the information for identifying compressed/uncompressed in the transmission data 105 indicates that no compression processing has been performed on the video data 208 and when the information for identifying subsampling/non-subsampling in the transmission data 105 indicates that no subsampling processing has been performed on the video data 208, the video data 208 is input as a predetermined unit image to the display-area determination module 305.

The decompression module 302 decompresses the input video data. Decompression processing performed by the decompression module 303 corresponds to compression processing applied in the transmitting side (such as the image transmission apparatus 100). When the information for identifying subsampled/non-subsampled in the transmission data 105 indicates that a subsampling processing has been performed on the video data 208, the decompressed video data is input to the inverse subsampling module 304. Otherwise, the decompressed video data is input as a predetermined unit image to the display-area determination module 305.

The inverse subsampling module 304 is input with video data corresponding to subsampled images obtained by performing pixel separation on a predetermined unit image. The inverse subsampling module 304 reconstructs a predetermined unit image by performing an inverse subsampling processing (image composition) on a plurality of video data items, in accordance with the pixel phase information in the transmission data 105. When part of subsampled images has been lost, the inverse subsampling module 304 may interpolate (spatially or temporally) lost pixels based on adjacent normal pixels. The inverse subsampling processing performed by the inverse subsampling module 304 corresponds to the subsampling processing applied in the transmitting side (such as the image transmission apparatus 100). For example, when the subsampling processing as shown in FIGS. 9A and 9B has been performed in the transmitting side, the inverse subsampling module 304 may reconstruct a predetermined unit image as shown in FIG. 11B from the subsampled images shown in FIG. 11A. Otherwise, when a plurality of subsampling processing are switched in the transmitting side, content of the inverse subsampling processing is determined in accordance with the identification information for the subsampling processing, which is included in the information for identifying subsampled/non-subsampled. The inverse subsampling module 304 inputs the reconstructed predetermined unit image to the display-area determination module 305.

The display-area determination module 305 determines a display area (spatial position) for the predetermined unit image, in accordance with the coordinate information of the predetermined unit image in the transmission data 105 (for example, see FIG. 8). The display-order determination module 306 generates an output video 307 by determining a display frame of the predetermined unit image in accordance with the frame number of the predetermined unit image in the transmission data 105. The output video 307 is output to a display device such as a television set.

As has been described above, the image reception apparatus according to the present embodiment corresponds to the image transmission apparatus also according to the present embodiment. Therefore, the image reception apparatus according to the present embodiment can stably output high-quality videos even when the transmission rate or the transmission error rate varies.

Second Embodiment

As shown in FIG. 4, an image transmission apparatus 400 according to the second embodiment of the present invention comprises a block division module 401, a compression module 402, and an output module 403. The image transmission apparatus 400 generates transmission data 406 by performing a compression processing on a predetermined unit image 404. The image transmission apparatus 400 may be appropriately incorporated as a part of the second video processor 202 or fourth video processor 204 in the image transmission apparatus 100 in FIG. 1.

The block division module 401 generates a plurality of image blocks by dividing a predetermined unit image 404. The shape and size of each of the image blocks are not limited. The block division module 401 inputs the plurality of image blocks to the compression module 402.

The compression module 402 compresses the image blocks in accordance with a predetermined size 405. The predetermined size 405 is a parameter which specifies a data amount after compression of each of the image blocks. Specifically, the compression module 402 compresses the image blocks each so as not to exceed the predetermined size 405. The predetermined size 405 may be a variable value or a fixed value. When the predetermined size 405 is a variable value, the value may be varied so as to follow variation of the transmission rate. The compression module 402 inputs compressed data items of the image blocks (hereinafter simply referred to as compressed block data) to the output module 403.

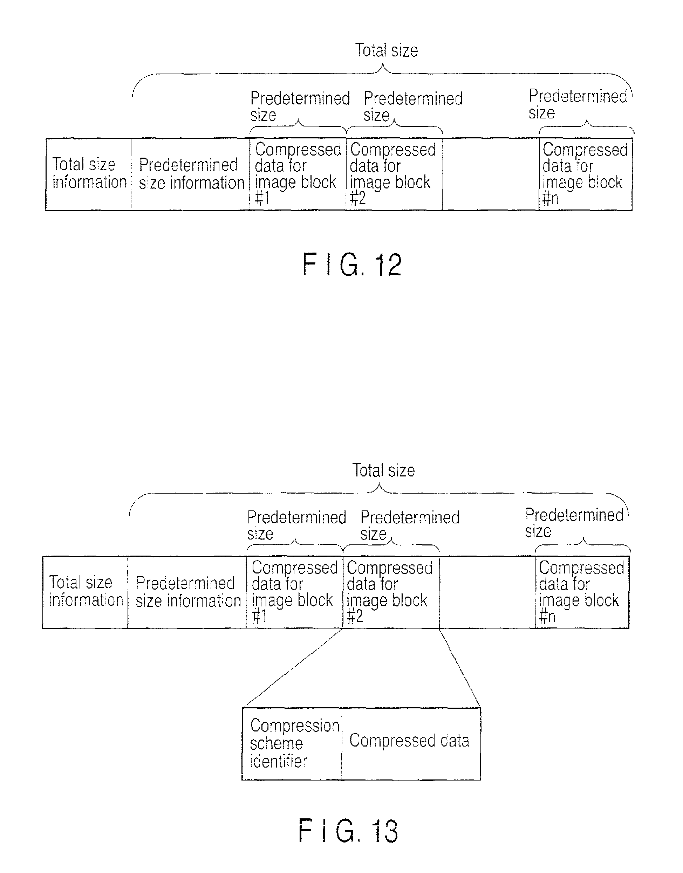

As shown in FIG. 12, the output module 403 generates, as transmission data 406, video data and total size information of the video data. The video data includes a set of a plurality of compressed block data items corresponding to the predetermined unit image 404 and predetermined size information. The predetermined size information indicates the predetermined size 405. The predetermined size information may be dealt with as part of size information of the video data in place of part of the video data. The total size information is information relating to a total size of the video data. The transmission data 406 is transmitted to an image reception apparatus, for example, through a wireless transmission channel. The image reception apparatus can access arbitrary compressed block data items (i.e., random access), based on the predetermined size information and total size information. Specifically, the image reception apparatus extracts the set of the plurality of compressed block data items, based on the total size information, and extracts each of the plurality of compressed block data items, based on the predetermined size information.

As has been described above, the image transmission apparatus according to the present embodiment divides each predetermined unit image into a plurality of image blocks, and compresses each of the plurality of image blocks in accordance with a predetermined size. The image transmission apparatus according to the present embodiment transmits the plurality of compressed block data items with the predetermined size information and total size information. Therefore, by the image transmission apparatus according to the present embodiment, random access to individuals of compressed block data items is possible, and a propagation range of errors is reduced to a block level. That is, even when the transmission error rate temporarily increases, high-quality images can be transmit stably.

As shown in FIG. 5, an image reception apparatus 500 according to the present embodiment comprises an input module 501, a separation module 502, and a decompression module 503. The image reception apparatus 500 generates an output image 504 from the transmission data 406. The transmission data 406 is transmitted from the image transmission apparatus 400 shown in FIG. 4 through, for example, a wireless transmission channel. The image reception apparatus 500 may be incorporated as a part of the decompression module 303 in the image reception apparatus 300 in FIG. 3.

The input module 501 inputs the transmission data 406 to the separation module 502. When the input module 501 detects an error in the transmission data 405, the input module 501 may request a transmitting side (e.g., an image transmission apparatus 400) to retransmit part or all of the transmission data 406.

The separation module 502 separates the predetermined size information and the set of plurality of compressed block data items, based on the total size information in the transmission data 406. The separation module 502 inputs the predetermined size information and the set of plurality of compressed block data items to the decompression module 503.

The decompression module 503 determines positions (for example, start position) of individuals of the compressed block data items in the set of the plurality of compressed block data items, based on the predetermined size information. Since a predetermined size is assigned to each of the plurality of compressed block data, the decompression module 503 can uniquely identify positions of individuals of the plurality of compressed block data items. The decompression module 503 generates an output image 504 by decompressing the individuals of the plurality of compressed block data items. A decompression processing performed by the decompression module 503 corresponds to the compression processing applied in the transmitting side (such as the image transmission apparatus 400).

When the decompression module 503 detects an error in part of the plurality of compressed block data items, the decompression module 503 may discard corresponding one of the plurality of compressed block data items, and interpolate (spatially or temporally) a corresponding image block, based on an adjacent normal image block. Alternatively, when the decompression module 503 detects an error in part of the compressed block data items, the decompression module 503 may discard a corresponding compressed block data item, and request the transmitting side to retransmit the corresponding compressed block data item. The decompression module 503 may decompress the retransmitted compressed block data item. These two types of processing may be switched, for example, based on the transmission rate. Specifically, the decompression module 503 may be configured to interpolate the image block when the transmission rate is low and to request retransmission when the transmission rate is high.

As has been described above, the image reception apparatus according to the present embodiment corresponds to the image transmission apparatus according to the present embodiment. Therefore, the image reception apparatus according to the present embodiment can randomly access individuals of compressed block data items, and a propagation range of errors is reduced to a block level. That is, even when the transmission error rate temporarily increases, high-quality images can be output stably.


Third Embodiment


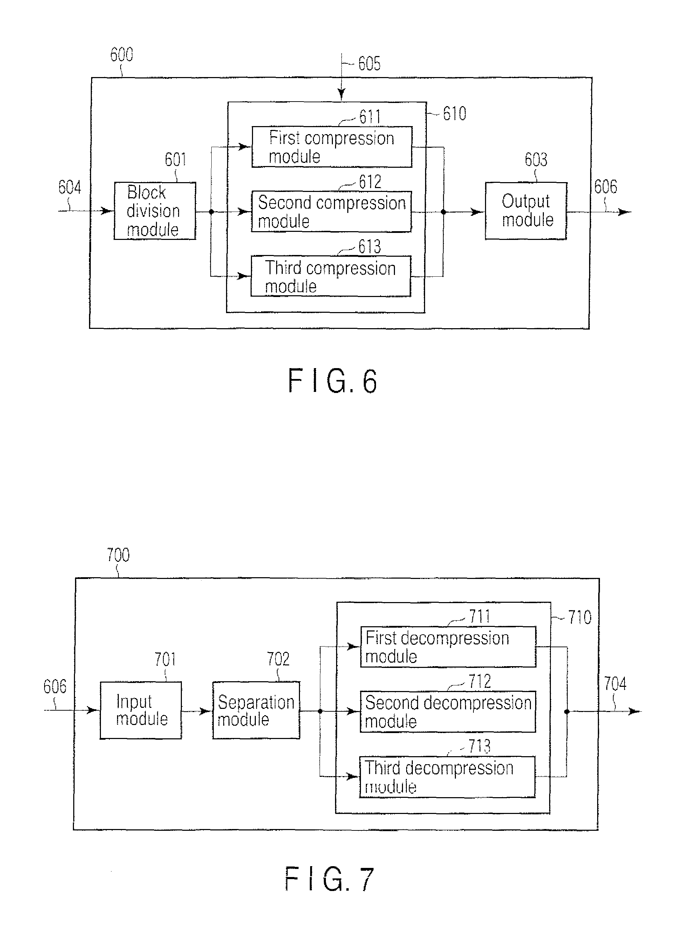

As shown in FIG. 6, an image transmission apparatus 600 according to the third embodiment of the present invention comprises a block division module 601, a compression module 610, and an output module 603. The image transmission apparatus 600 generates transmission data 606 by performing a compression processing on a predetermined unit image 604. The image transmission apparatus 600 may be appropriately incorporated as a part of the second video processor 202 or fourth video processor 204 in the image transmission apparatus 100 in FIG. 1.

The block division module 601 generates a plurality of image blocks by dividing a predetermined unit image 604. The shape and size of each of the image blocks are not limited. The block division module 601 inputs the plurality of image blocks to the compression module 610.

The compression module 610 compresses the image blocks in accordance with a predetermined size 605. The predetermined size 605 is a parameter which specifies a data amount after compression of each of the image blocks. Specifically, the compression module 610 compresses the image blocks each so as not to exceed the predetermined size 605. The predetermined size 605 may be a variable value or a fixed value. When the predetermined size 605 is a variable value, the value may be varied so as to follow variation of the transmission rate. The compression module 610 can select and apply one of a plurality of compression schemes for a block. For example, as shown in FIG. 6, the compression module 610 comprises a first compression module 611, a second compression module 612, and a third compression module 613.

The first compression module 611 applies, to the image block, a first compression processing (lossless compression) such as a differential pulse code modulation (DPCM) which compresses differences between pixels. The second compression module 612 applies, to the image block, a second compression processing (lossy compression) such as a discrete cosine transform (DCT) which utilizes energy concentration onto a low frequency area, accompanied by an orthogonal transform. The third compression module 613 applies, to the image block, a third compression processing (fixed-length compression for a pixel) of a so-called color palette scheme. A compressed block data item generated by the color palette scheme includes a correspondence table (color palette) between pixel values and index numbers, and index numbers assigned respectively to pixels in a block.

The compression module 610 may select a compression scheme depending on a property of each image block. For example, in general, the second compression processing is more adequate for natural images than the third compression processing, and the third compression processing is more adequate for artificial images (such as computer graphics) than the second compression processing. The compression module 610 may experimentally apply the first to third compression processing, and then select a compression processing which minimizes compression distortion. As shown in FIG. 13, the compression module 610 adds an identifier of a compression scheme to a compressed data obtained by performing a compression processing on an image block, and inputs the compressed data item added with the identifier, as a compressed block data item.

As shown in FIG. 13, the output module 603 generates, as transmission data 606, video data and total size information of the video data. The video data includes a set of a plurality of compressed block data items corresponding to the predetermined unit image 604 and predetermined size information. The predetermined size information expresses the predetermined size 605. The predetermined size information may be dealt with as part of size information of the video data in place of part of the video data. The total size information is information relating to a total size of the video data. The transmission data 606 is transmitted to an image reception apparatus, for example, through a wireless transmission channel. The image reception apparatus can access arbitrary compressed block data items (i.e., random access), based on the predetermined size information and total size information. Specifically, the image reception apparatus extracts the set of the plurality of compressed block data items, based on the total size information, and extracts individuals of the plurality of compressed block data items, based on the predetermined size information.

As has been described above, the image transmission apparatus according to the present embodiment divides each predetermined unit image into a plurality of image blocks, and compresses each of the plurality of image blocks in accordance with a predetermined size. The image transmission apparatus transmits the compressed image blocks together with predetermined size information and total size information. Therefore, by the image transmission apparatus according to the present embodiment, random access to individuals of compressed block data items is possible, and a propagation range of errors can be reduced to a block level. That is, even when the transmission error rate temporarily increases, the image transmission apparatus according to the present embodiment can stably transmit high-quality videos. Further, the image transmission apparatus according to the present embodiment can switch a plurality of compression schemes for a block. Therefore, the image transmission apparatus according to the present embodiment can apply a compression processing adequate for a property of each of the image blocks.

As shown in FIG. 7, an image reception apparatus 700 according to the present embodiment comprises an input module 701, a separation module 702, and a decompression module 710. The image reception apparatus 700 generates an output image 704 from the transmission data 606. The transmission data 606 is transmitted from the image transmission apparatus 600 shown in FIG. 6 through, for example, a wireless transmission channel. The image reception apparatus 700 may be incorporated as a part of the decompression module 303 in the image reception apparatus 300 in FIG. 3.

The input module 701 inputs the transmission data 606 to the separation module 702. When the input module 701 detects an error in the transmission data 606, the input module 701 may request a transmitting side (e.g., an image transmission apparatus 600) to retransmit part or all of the transmission data 606.

The separation module 702 separates the predetermined size information and the set of the plurality of compressed block data items, based on the total size information in the transmission data 606. The separation module 702 inputs the predetermined size information and the set of the plurality of compressed block data items to the decompression module 710.

The decompression module 710 determines positions (for example, start position) of individuals of the compressed block data items in the set of the plurality of compressed block data items, based on the predetermined size information. Since a predetermined size is assigned to each of the plurality of compressed block data items, the decompression module 710 can uniquely identify the positions of individuals of the plurality of compressed block data items. The decompression module 710 generates an output image 704 by decompressing the individuals of the plurality of compressed block data items in accordance with the identifiers of compression schemes. Decompression processing performed by the decompression module 710 corresponds to compression processing applied in the transmitting side (such as the image transmission apparatus 600). For example, as shown in FIG. 7, the decompression module 710 comprises a first decompression module 711, a second decompression module 712, and a third decompression module 713.

The first decompression module 711 corresponds to the first compression module 611 in FIG. 6. Specifically, the first decompression module 711 generates the output image 704 by applying, to the compressed block data, a first decompression processing corresponding to the first compression processing. The second decompression module 712 corresponds to the second compression module 612 in FIG. 6. Specifically, the second decompression module 712 generates the output image 704 by applying, to the compressed block data, a second decompression processing corresponding to the second compression processing. The third decompression module 713 corresponds to the third compression module 613 in FIG. 6. Specifically, the third decompression module 713 generates the output image 704 by applying, to the compressed block data, a third decompression processing corresponding to the third compression processing.

When the decompression module 710 detects an error in part of the plurality of compressed block data items, the decompression module 710 may discard a corresponding compressed block data item, and interpolate (spatially or temporally) a corresponding image block, based on an adjacent normal image block. Alternatively, when the decompression module 710 detects an error in part of the compressed block data items, the decompression module 710 may discard a corresponding compressed block data item, and request the transmitting side to retransmit the corresponding compressed block data item. The decompression module 710 may decompress the retransmitted compressed block data item. These two types of processing may be switched, for example, based on the transmission rate. Specifically, the decompression module 710 may be configured to interpolate the image block when the transmission rate is low and to request retransmission when the transmission rate is high.

As has been described above, the image reception apparatus according to the present embodiment corresponds to the image transmission apparatus according to the present embodiment. Therefore, the image reception apparatus according to the present embodiment can randomly access individuals of compressed block data items, and a propagation range of errors is reduced to a block level. That is, even when the transmission error rate temporarily increases, high-quality images can be output stably. The image reception apparatus according to the present embodiment switches and applies a plurality of decompression schemes in accordance with identifiers of compression schemes. Therefore, the image reception apparatus according to the present embodiment can output high-quality images adapted for properties of individuals of image blocks.

Fourth Embodiment

An image transmission apparatus 800 according to the fourth embodiment of the present invention is equivalent to a configuration obtained by substituting the compression module 402 in the image transmission apparatus 400 in FIG. 4 with a different compression module 810. Descriptions will now be made below mainly of different parts between the compression module 810 and the compression module 402 will be described. The image transmission apparatus 800 may be appropriately incorporated as a part of the second video processor 202 or fourth video processor 204 in the image transmission apparatus 100 in FIG. 1.

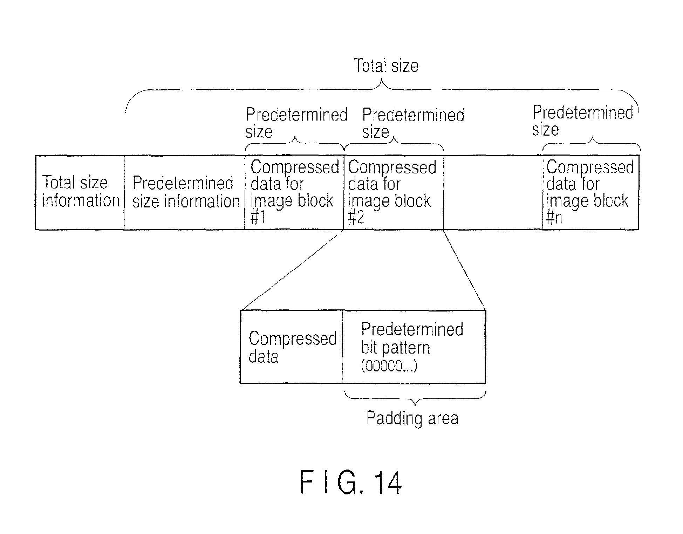

The compression module 810 performs the same compression processing as the compression module 402. Specifically, image blocks each are compressed so as not to exceed a predetermined size 405. Here, the size of each compressed block data item is not always equal to the predetermined size 405 but may generate a residual area (padding area). The residual area is usually filled with meaningless padding bits. The compression module 810 stores a predetermined bit pattern in the residual area, as shown in FIG. 14. The predetermined bit pattern may be arbitrarily determined, and may be a string of "0" or "1" or may be a part (such as a high-order bit or low-order bit) of a characteristic amount, such as a frame number of the predetermined unit image, coordinate information of the predetermined unit image. However, this predetermined bit pattern is supposed to be generated in accordance with a rule common to both of a transmitting side (image transmission apparatus) and a receiving side (image reception apparatus).

As has been described above, the image transmission apparatus according to the present embodiment stores a bit pattern generated in accordance with a common rule, into residual areas which do not reach a predetermined size in each compressed block data item. Therefore, by the image transmission apparatus according to the present embodiment, an error can be determined, depending on equality/inequality concerning bit patterns between the transmitting and receiving sides. That is, high-quality images can be stably transmitted even when the transmission error rate temporarily increases.

An image reception apparatus 900 according to the present embodiment is equivalent to a configuration of the image reception apparatus 500 in FIG. 5 in which the decompression module 503 is substituted with a different decompression module 910. Descriptions will now be made below mainly of different parts between the decompression modules 910 and 503.

The decompression module 910 performs the same decompression processing as the decompression module 503. Further, when decompressed data of an image block dose not reach a predetermined size, the decompression module 910 generates a bit pattern in accordance with a rule common to the image transmission apparatus 800. The decompression module 910 compares the generated bit pattern with a bit pattern stored in a compressed block data item. When both bit patterns disagree with each other, the decompression module 910 detects an error in the compressed block data item. Otherwise, when decompressed data of an image block exceeds the predetermined size, the decompression module 910 also detects an error in the compressed block data item. When the decompression module 910 detects an error in a compressed block data item, the decompression module 910 performs interpolation for a corresponding image block or requests retransmission, as in the decompression module 503.

As has been described above, the image reception apparatus according to the present embodiment corresponds to the image transmission apparatus according to the present embodiment. Therefore, by the image reception apparatus according to the present embodiment, an error can be determined, depending on agreement/disagreement between bit patterns in the transmitting and receiving sides. That is, high-quality images can be output even when the transmission error rate temporarily increases.

Fifth Embodiment

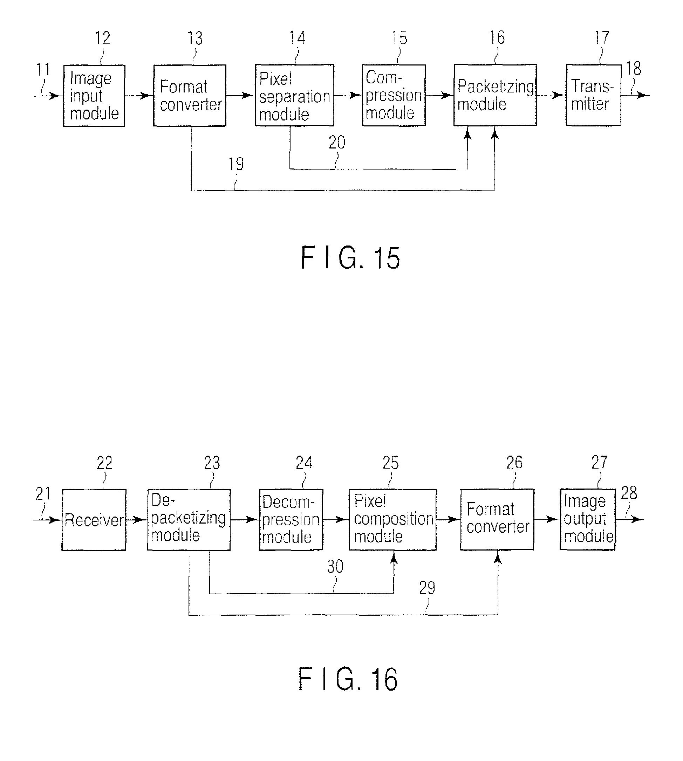

FIG. 15 is a block diagram of an image transmission apparatus according to the fifth embodiment of the invention. An input image 11 is input to an image input module 12. The image input module 12 inputs the input image 11 to a format converter 13 for each predetermined unit image (for example, an image area included in a predetermined number of consecutive lines). The format converter 13 performs reduction conversion in a horizontal direction for each signal component of the predetermined unit image. The format converter 13 may further perform conversion between color spaces (for example, conversion from RGB to YCbCr). A predetermined unit image subjected to the horizontal reduction conversion is separated into pixels of a plurality of horizontal phases by a pixel separation module 14. A compression module 15 performs a compression processing (for example, a compression processing using a discrete cosine transform [DCT]) on the predetermined unit image, independently for each of separated pixel phases. Compressed data is packetized by a packetizing module 16. Packetized data is subjected to, for example, an OFDM modulation by a transmitter 17, and is transmitted as transmission data 18 on a wireless millimeter wave in a 60-GHz band. The transmitter 17 transmits the transmission data 18 by using a transmission channel within a frequency range of 57 to 66 GHz. The format converter 13, pixel separation module 14, and compression module 15 each comprise a plurality of modes one of which includes no processing (bypass processing), and can switch the modes for each predetermined unit image. The transmission data 18 comprises information 19 concerning a reduction rate for the format converter 13, information 20 concerning pixel separation types and pixel separation phases for the pixel separation module 14, and information concerning the compression modes for the compression module 15.

FIG. 16 is a block diagram of an image reception apparatus according to the present embodiment. The image reception apparatus shown in FIG. 16 receives transmission data 21 including compressed image data compressed by the image transmission apparatus shown in FIG. 15, and decompresses the compressed image data. The transmission data 21 is a wireless signal of a millimeter wave in a 60-GHz band, which has been subjected to, for example, an OFDM modulation. The transmission data 21 is transmitted by using, for example, a transmission channel within a frequency range of 57 to 66 GHz. A receiver 22 receives the transmission data 21. The receiver 22 performs a demodulation processing on the received transmission data 21. A depacketizing module 23 extracts information 29 concerning a reduction rate and information 30 concerning pixel separation types and pixel separation phases, from the demodulated transmission data 21. The information 29 concerning a reduction rate and the information 30 concerning pixel separation types and phases are specified for each compressed image data item of predetermined unit image. A decompression module 24 performs a decompression processing of the received compressed image data for each compressed image data item of predetermined unit image. The decompression module 24 performs the decompression processing, by using information concerning a color space of an input image, information concerning a horizontal width of an image frame, and information indicating validity/invalidity of pixel separation which will be described later, in addition to the information 29 concerning a reduction rate, for each compressed image data item of predetermined unit image. A pixel composition module 25 performs a pixel composition processing of a decompressed image by using the information 30 concerning pixel separation types and phases. A format converter 26 performs a horizontal enlargement processing for each of signal components of the image subjected to the pixel composition processing, by using the information 29 concerning a reduction rate. The format converter 13 may further perform conversion between color spaces (for example, from YCbCr to RGB). An image output module 27 outputs the image subjected to format conversion, as a reproduced image 28 in units of lines.

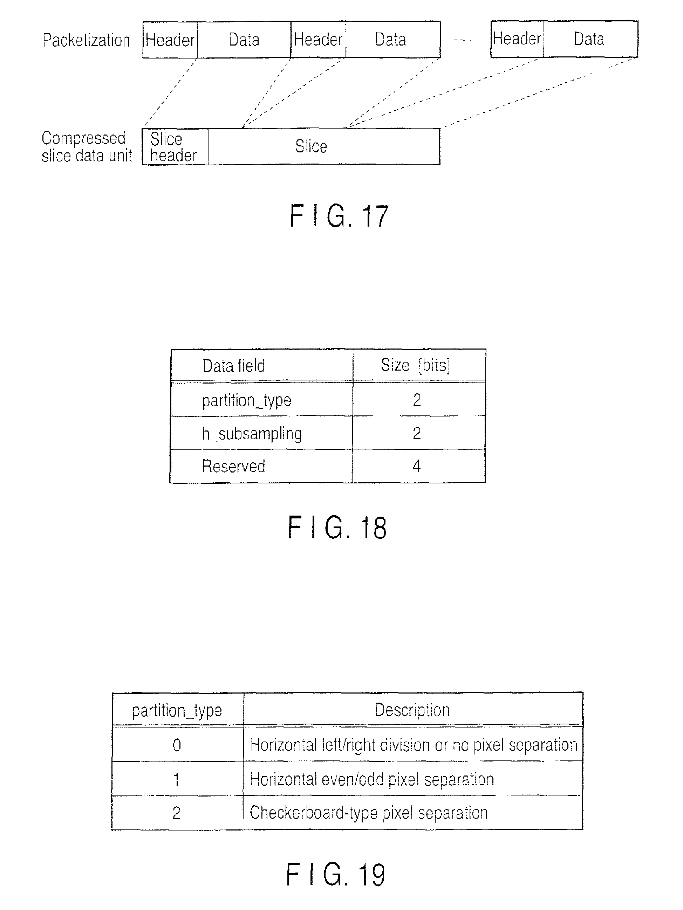

FIG. 17 shows an example of a transmission data structure according to the fifth embodiment. A predetermined unit image is compressed independently for each of separated pixel phases. Here, independently compressed data items are respectively referred to as slices. Each slice is divided into a plurality of blocks (for example, $8 \times 8$ pixels) and compressed in units of blocks. Each slice is added with a slice header having a fixed bit length. A set of a slice header and a slice is referred to as a compressed slice data unit. The packetizing module 16 packetizes the compressed slice data unit by dividing the compressed slice data unit into a plurality of data items and by adding a header to each of the plurality of divided data items.

FIG. 18 shows an example of the slice header according to the fifth embodiment. The slice header includes a 2-bit data field "partition_type" indicating a pixel separation type and a 2-bit data field "h_subsampling" indicating a horizontal reduction rate.

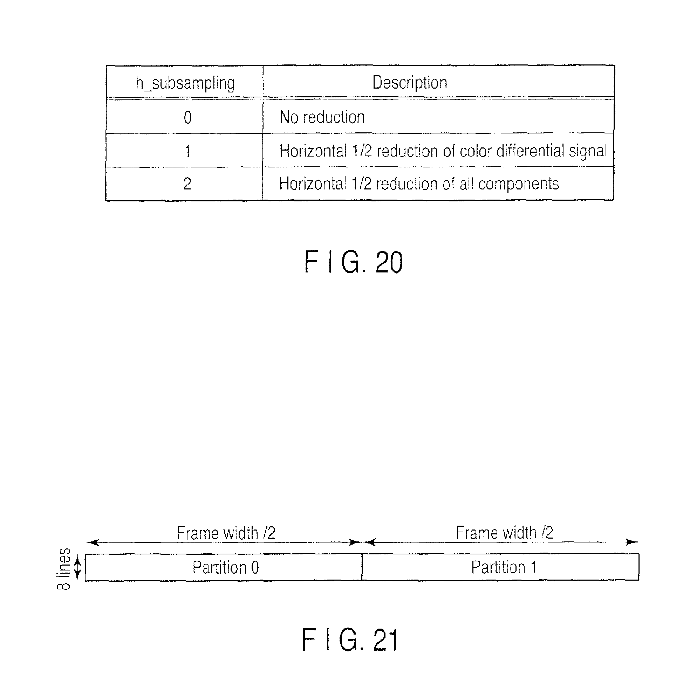

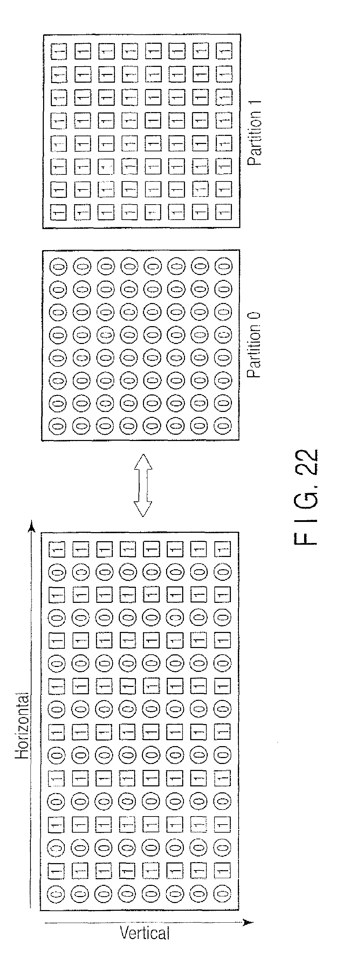

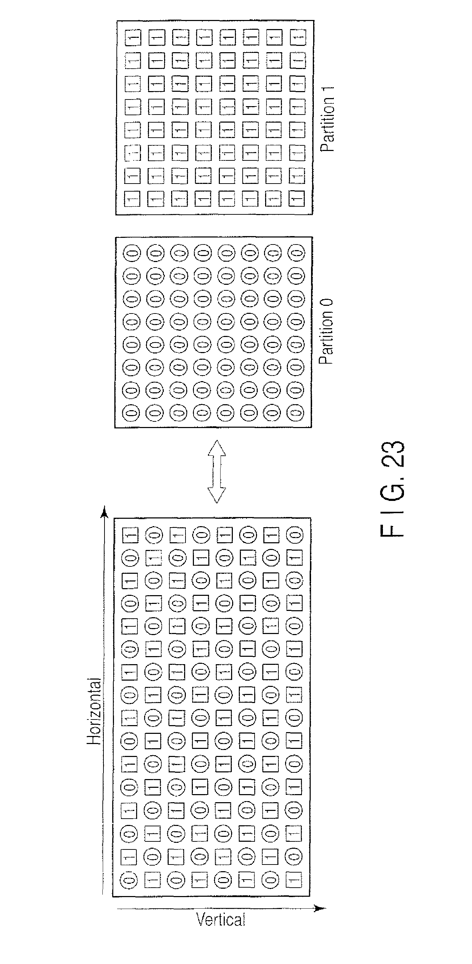

FIG. 19 is a table for explaining information "partition_type" indicating a pixel separation type according to the fifth embodiment. "partition_type" = 0 indicates a pixel separation type of horizontally dividing an image line into two left and right halves. When "PartitionEnable" described later is 0 (pixel separation is off), 0 is always set in the "partition_type", which means no pixel separation done. FIG. 21 shows an example of the horizontal left/right division. In the horizontal left/right division, eight consecutive lines are regarded as a predetermined unit image, and one predetermined unit image is divided into two areas, i.e., the left half of one predetermined unit image as a partition 0 (pixel separation phase 1) and the right half thereof as a partition 1 (pixel separation phase 2). The divided partitions (pixel phases) are compressed independently from each other. "partition_type" = 1 indicates a pixel separation type of horizontally separating pixels into even-numbered pixels and odd-numbered pixels. FIG. 22 shows an example of horizontal even/odd pixel separation. In the horizontal even/odd pixel separation, eight consecutive lines are regarded as a predetermined unit image, which is separated into horizontally even-numbered pixels grouped as a partition 0 (pixel separation phase 1) and horizontally odd-numbered pixels grouped as a partition 1 pixel separation phase 2). The separated partitions (pixel phases) are compressed independently from each other. "partition_type" = 2 indicates a case of separating pixels, in form of a checker board. FIG. 23 shows an example of this checkerboard-type pixel separation. In the checkerboard-type pixel separation, eight consecutive lines are regarded as a predetermined unit image, which is horizontally separated into even-numbered pixels in even-numbered lines and odd-numbered pixels in odd-numbered lines, grouped as a partition 0 (pixel separation phase 1), and odd-numbered pixels in even-numbered lines and even-numbered pixels in odd-numbered lines, grouped as a partition 1 (pixel separation phase 2). The separated partitions (pixel phases) are compressed independently from each other.

In order to perform pixel separation in a line direction (vertical direction) in image compression for a predetermined number of lines (eight lines here), a number of vertical lines of a predetermined unit image before the pixel separation need be doubled (to sixteen lines here). Doubling of the number of vertical lines causes an increase of a delay amount and an image memory amount related to compression. Further, when the number of vertical lines is doubled, there is an increase in a delay amount and an image memory amount to scan-convert predetermined unit images into an output image in units of lines, also in image decompression. However, when the pixel separation is limited to the horizontal direction, pixels can be separated into groups of two phases with maintaining the number of lines of a predetermined unit image. Therefore, increases of delay amounts and image memory amounts related to the compression and decompression processing can be suppressed.

Further, when "PartitionEnable" described later is 0, i.e., when the pixel separation is off, slices may be formed by compressing each consecutive eight lines as a predetermined unit. Overhead for slice headers and packetization can then be suppressed. When "PartitionEnable" is 1, i.e., when the pixel separation is on, a pixel separation type is selected, for each consecutive eight lines, from the horizontal right/left division of separating the consecutive eight lines into left and right halves without separation in units of pixels, the horizontal even/odd pixel separation in units of pixels, and the checkerboard-type pixel separation in units of pixels. Compressed transmission with less deterioration in image quality can be achieved by selecting a pixel separation type which optimizes a balance between an error robustness and coding efficiency, depending on a transmission rate and an error rate which vary moment by moment in shorter cycles than one frame. In any of the pixel separation types selected, consecutive eight lines are compressed into two slices, and therefore, the packetizing module 16 and transmitter 17 in a subsequent process can simply operate without considering the pixel separation types (regardless of the pixel separation types).

FIG. 20 is a table for explaining "h_subsampling" indicating a horizontal reduction rate according to the fifth embodiment. "h_subsampling" = 0 indicates that compression has been performed without horizontal reduction. "h_subsampling" = 1 indicates that only color differential signals have been compressed by horizontal reduction to 1/2. "h_subsampling" = 2 indicates that all image signal components (for example, R, G, and B, or Y, Cb, and Cr) have been compressed by horizontal reduction to 1/2. In the receiving side, when "h_subsampling" = 1, an enlargement processing is performed, for a decompressed and pixel-composed image, to horizontally double color differential signals. Otherwise, when "h_subsampling" = 2, an enlargement processing is performed to horizontally double all image signal components.

No horizontal reduction, reduction of only color differential signals, and reduction of all components are switched for each predetermined unit image, depending on the transmission rate or a property of an image (compression difficulty) for a predetermined unit which vary moment by moment in shorter cycles than one frame. Then, transmission with high image quality can be achieved, optimizing a balance between compression distortion and deterioration of resolution due to size reduction.

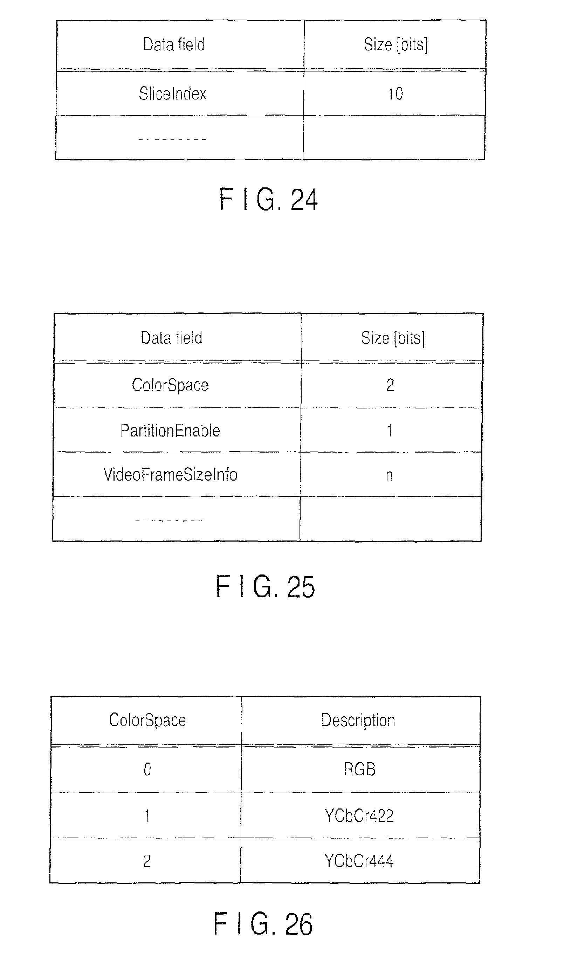

FIG. 24 shows an identifier "SliceIndex" of a compressed slice. The slice identifier is included in a packet header or a slice header in FIG. 17. When "PartitionEnable" described later is 1 (pixel separation on), the slice identifier includes a partition (pixel phase) number (i.e., 1 or 0) for the pixel separation described above. Therefore, a partition (pixel phase) number of each slice can be extracted as follows.

$$\text{Partition number} = \begin{cases} \text{SliceIndex} \& 1 & \text{where PartitionEnable} = 1 \\ 0 & \text{where PartitionEnable} = 0 \end{cases}$$

FIG. 25 is a table showing an example of transmission-image format information according to the fifth embodiment. The transmission-image format information includes "ColorSpace" as information of a color space of an input image, "PartitionEnable" as information indicating valid/invalid pixel separation and "Video Frame Size Info" as information of an image frame size. The transmission-image format information is transmitted together with compressed image data or transmitted from the transmitting side to the receiving side when the transmitting and receiving sides connect each other.

FIG. 26 is a table for explaining "ColorSpace" as the information of a color space of an input image. Values 0, 1, and 2 as "ColorSpace" respectively indicate that input images are of an RGB image signal, a YCbCr422 image signal, and a YCbCr444 image signal.

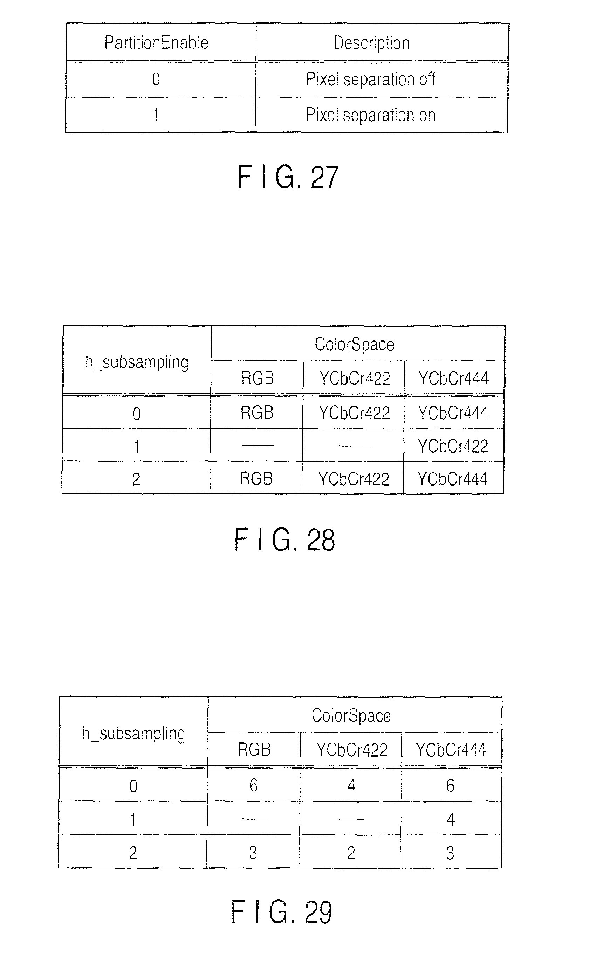

FIG. 27 is a table for explaining "PartitionEnable" as the information indicating valid/invalid pixel separation. Values 0 and 1 as "PartitionEnable" respectively indicate that pixel separation is off (invalid) and pixel separation is on (valid).

FIG. 28 is a table for explaining color spaces of compressed data according to the fifth embodiment. Color spaces of compressed data indicate color spaces of images input to the compression module 15 and output from the decompression module 24, and are determined by "ColorSpace" as information of a color space of the input image (of the image transmission apparatus) and by "h_subsampling" indicating a horizontal reduction rate. When the horizontal reduction processing is off ("h_subsampling" = 0) or 1/2 for all components ("h_subsampling" = 2), color spaces of compressed data and an input image agree with each other. On the other hand, horizontal reduction of color differential signals to 1/2 ("h_subsampling" = 1) is applicable only when the color space of an input image is YCbCr444, and the color space of compressed data thereof is YCbCr422. In accordance with FIG. 28, information of a color space of compressed data is derived by using information of a color space of an input image and a horizontal reduction rate. For each slice, the information of the color space of the compressed data is set for the compression module 15 in the transmission apparatus and for the decompression module 24 of the reception apparatus.

A total number NB of blocks (8 × 8 pixel blocks) of all components that form a slice is calculated as follows.

$$NB = \begin{cases} NBF \times \dfrac{frame\_width}{32} & where\ PartitionEnable = 1 \\ NBF \times \dfrac{frame\_width}{16} & where\ PartitionEnable = 0 \end{cases}$$

As shown in FIG. 29, NBF is a block number coefficient of compressed data and is determined by "ColorSpace" as information of a color space of an input image and by "h subsampling" indicating a horizontal reduction rate. "frame_width" is a horizontal width of an image frame and can be derived from "VideoFrameSizeInfo" as information of an image frame size. The above expression supports a case that a slice is formed of an image of consecutive eight lines where no pixel division is performed ("PartitionEnable" = 0) and another case that two slices are formed of an image of consecutive eight lines ("PartitionEnable" = I). However, a combination of pixel separation and horizontal reduction is inhibited when the combination would not result in components each formed of a multiple of 8 x 8 pixels. That is, when a color space of compressed data is RGB or YCbCr444, NB need be a multiple of 3. Otherwise, when a color space of an input image is YCbCr422, NB need be a multiple of 4. According to the above expression, the number of blocks of compressed data of each slice is derived by using information of a color space of an input image, a horizontal width of an image frame, valid/invalid pixel separation, and a horizontal reduction rate. For each slice, the number of blocks of compressed data of each slice is set for the compression module 15 in the transmitting device and for the decompression module 24 in the reception apparatus.

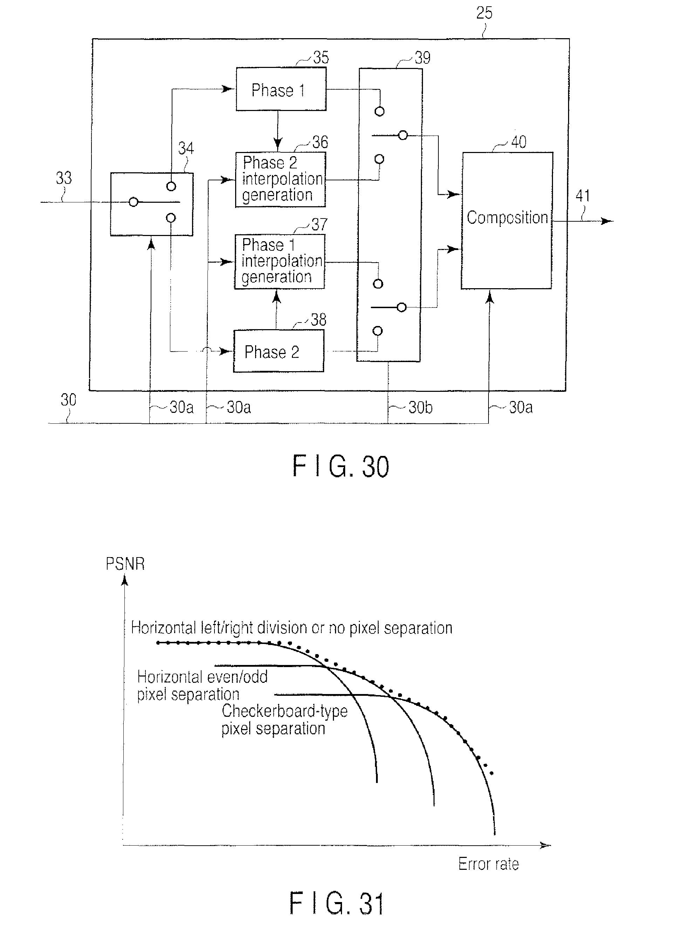

FIG. 30 shows an example of the pixel composition module 25. The pixel composition module 25 is input with an image signal 33 decompressed by the decompression module 24, information 30a concerning pixel separation types and phases from the depacketizing module 23, and receiving error information 30b of compressed data for each phase. The receiving error information 30b is based on results of detecting receiving errors from the receiver 22 and depacketizing module 23. A select module 34 temporarily stores an image signal 33 into an image buffer (phase 1) 35 or an image buffer (phase 2) 38 in accordance with the information 30a. An interpolation module 36 generates an interpolation image for the phase 2, based on an image signal in the buffer (phase 1) 35. An interpolation module 37 generates an interpolation image for the phase 1, based on an image signal in the buffer 38 (phase 2). A select module 39 selects pixels to be output to the composition module 40, in accordance with the information 30b. The select module 39 outputs an output from the interpolation module 36 or 37 to the composition module 40, with respect to a phase which has caused an error. On the other hand, the select module 39 outputs an output from the image buffer 35 (phase 1) or 38 (phase 2) to the composition module 40, with respect to a phase which has caused no error. The composition module 40 composes pixels output from the select module 39 to generate and output an image 41. Thus, a predetermined unit image is subjected to pixel separation and each of the separated pixels is independently compressed. Pixels in a phase which has caused an error are interpolated and generated from pixels in a phase which has been normally received. In this manner, a predetermined unit image can be reproduced without being lost all at once, and robust image transmission can be achieved against transmission errors.

FIG. 31 shows effects of the pixel separation according to the present embodiment. In general, pixel separation causes deterioration of compression efficiency with respect to a compression scheme using correlations between adjacent pixels, such as a DCT. For example, horizontal even/odd pixel separation doubles a horizontal inter-pixel distance and therefore deteriorates horizontal correlation although vertical inter-pixel correlation can be maintained. On the other hand, checkerboard-type pixel separation doubles each of horizontal and vertical inter-pixel distances and maintains a diagonal inter-pixel distance. In general, natural image signals have high inter-pixel correlation in both vertical and horizontal directions. Horizontal left/right division maintains continuity of pixels and does therefore not cause much quality loss, compared with a case of performing no pixel separation, although compression efficiency is expected to deteriorate due to horizontal division into two slices.

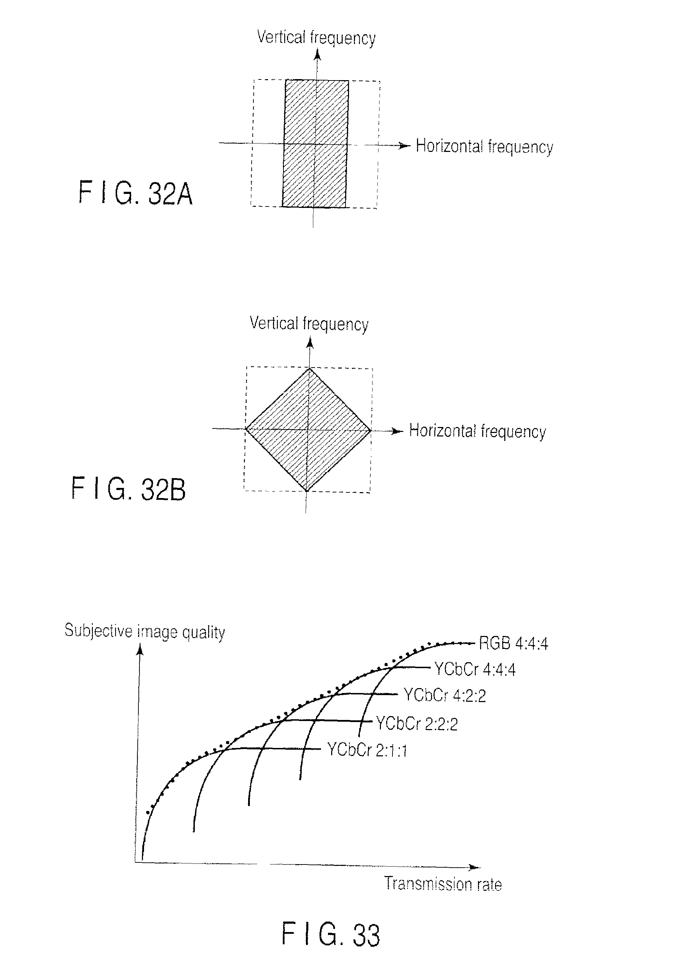

Therefore, the compression efficiency deteriorates in an order of the horizontal left/right division or no pixel separation, the horizontal even/odd pixel separation, and the checkerboard-type pixel separation. Further, when a receiving error occurs in one of two separated phases, interpolation pixels are generated from pixels in a normally received phase. Since an image signal subjected to the horizontal even/odd pixel separation maintains only a 1/2 band in the horizontal direction as shown in FIG. 32A, the interpolation image is horizontally blurred. On the other hand, as shown in FIG. 32B, an image signal subjected to the checkerboard-type pixel separation can maintain horizontal and vertical bands which are significant for subjective image quality. Therefore, the checkerboard-type pixel separation achieves an interpolation image with higher subjective image quality than the horizontal even/odd pixel separation. In many cases, natural image signals include small diagonal-frequency components due to influence from compression and filter processing. Therefore, the checkerboard-type pixel separation achieves higher image quality than the horizontal even/odd pixel separation, even from a viewpoint of peak signal-to-noise ratio (PSNR). On the other hand, the horizontal left/right pixel division and no pixel separation causes an image area of eight lines forming a slice to be lost when a receiving error occurs. When lost pixels thereof are interpolated from upper and lower slices, severe quality deterioration is caused in view of both the subjective image quality and PSNR. That is, a relationship of trade-off exists between deterioration of compression efficiency due to a pixel separation type and an error robustness of the pixel separation type. Accordingly, transmission quality can be improved by selecting an adequate pixel-separation type depending on an error rate. Specifically, as shown in FIG. 31, when an error rate is low, the Horizontal left/right division or no pixel separation most improves received image quality. However, as the error rate (i.e., necessity for error concealment) increases gradually, the received image quality improves in the order of the horizontal even/odd pixel separation and the checkerboard-type pixel separation. As indicated by a dotted line in FIG. 31, transmission image quality can be improved compared with a fixed pixel-separation type, by adequately selecting a pixel separation type for every predetermined unit, such as a slice, depending on a transmission error rate which varies moment by moment in shorter cycles than one frame, as has been described above.

FIG. 33 shows effects of reduction conversion according to the present embodiment. When an input image is of an RGB signal and when a transmission rate is sufficiently high, deterioration of image quality can be avoided by performing compression directly on the RGB signal to avoid conversion loss caused by color space conversion from RGB to YCbCr. On the other hand, in general, there is strong correlation between RGB signal components each other. Therefore, compression after conversion RGB into YCbCr improves compression efficiency and reduces compression distortion, compared with direct compression in the RGB color space. As the transmission rate decreases, loss caused by the direct compression in RGB increases to be greater than loss caused by the color space conversion from RGB to YCbCr, i.e., compression in the YCbCr is more effective. When the transmission rate further decreases, trade-off occurs between resolution and compression distortion. Therefore, as the transmission rate further decreases, it is more effective to perform compression with the number of samples reduced in an order of color differential signals and luminance signals. In FIG. 33, YCbCr222 denotes compression in which each signal component of YCbCr444 is horizontally reduced to 1/2. YCbCr211 shows compression in which each signal component of YCbCr422 is horizontally reduced to 1/2. As indicated by a dotted line in FIG. 33, transmission image quality can be more improved than with a fixed color space and a fixed number of samples, by adaptively selecting a color space and a reduction rate for color differential signals and luminance signals, depending on a transmission rate which varies moment by moment in shorter cycles than one frame, as has been described above.

It should be noted that the present invention is not limited to the above embodiments, but may be realized by modifying the structural elements without departing from the gist at the stage of implementation. Moreover, by suitably combining structural elements disclosed in the above embodiments, various inventions can be attained. In addition, a structure in which, for instance, some structural elements are omitted from the elements of the entire structure indicated in any of the embodiments is conceivable. Further, the structural embodiments described in different embodiments may be suitably combined.

For example, a program which performs each of the embodiments described above can be provided, stored in storage media which are readable from computers. The storage media may employ any type of storage formats insofar as the storage media can store the program and be readable from computers, such as a magnetic disk, an optical disc (such as CD-ROM, CD-R, or DVD), a magnetooptical disc (MO), and a semiconductor memory.

The program which performs processing described in the above embodiments may be stored in a computer (server) connected to a network such as the Internet and may be downloaded by a computer (client) through the network.


Description of the Numerals

11 -        input image

12 -    image input module

13 -    format converter

14 -    pixel separation module

15 -    compression module

16 -    packetizing module

17 -    transmitter

18, 21 -    transmission data

22 -    receiver

23 -    depacketizing module

24 -    decompression module

25 -    pixel composition module

26 -    format converter

27 -    image output module

28 -    reproduced image

19, 29 -    information concerning a reduction rate

20, 30 -    information concerning pixel separation

30a -    information concerning pixel separation types and pixel separation phases

30b -    receiving error information

33 -    decompressed image signal

34 -    select module

35 -    image buffer (phase 1)

36, 37 -    interpolation module

38 -    image buffer (phase 2)

39 -    select module

40 -    composition module

41 -    image

100 -    image transmission apparatus

101 -    division module

102 -    video processor

| 103 - | output module |
|---|---|
| 104 - | input image |
| 105 - | transmission data |
| 201 - | first video processor |
| 202 - | second video processor |
| 203 - | third video processor |
| 204 - | fourth video processor |
| 205 - | predetermined unit image |
| 206 - | transmission rate |
| 207 - | transmission error rate |
| 208 - | video data |
| 300 - | image reception apparatus |
| 301 - | input module |
| 302 - | video data extraction module |
| 303 - | decompression module |
| 304 - | inverse subsampling module |
| 305 - | display area determination module |
| 306 - | display order determination module |
| 307 - | output video |
| 400 - | image transmission apparatus |
| 401 - | block division module |
| 402 - | compression module |
| 403 - | output module |
| 404 - | predetermined unit image |
| 405 - | predetermined size |
| 406 - | transmission data |
| 500 - | image reception apparatus |
| 501 - | input module |
| 502 - | separation module |

| 503 - | decompression module |
|---|---|
| 504 - | output image |
| 600 - | image transmission apparatus |
| 601 - | block division module |
| 603 - | output module |
| 604 - | predetermined unit image |
| 605 - | predetermined size |
| 606 - | transmission data |
| 610 - | compression module |
| 611 - | first compression module |
| 612 - | second compression module |
| 613 - | third compression module |
| 700 - | image reception apparatus |
| 701 - | input module |
| 702 - | separation module |
| 704 - | output image |
| 710 - | decompression module |
| 711 - | first decompression module |
| 712 - | second decompression module |
| 713 - | third decompression module |
| 800 - | image transmission apparatus |
| 810 - | compression module |
| 900 - | image reception apparatus |
| 910 - | decompression module |

**Claims**

1. An image transmission apparatus comprising:

a division module configured to divide an input image into at least one predetermined unit images;
a video processor configured to generate video data by applying one of first to fourth video processing to the predetermined unit image, the first to fourth video processing being

(a) the first video processing of generating the predetermined unit image as the video data,

(b) the second video processing of generating the video data by compressing the predetermined unit image,

(c) the third video processing of performing a subsampling processing of performing pixel-separation of the predetermined unit image into subsampled images in accordance with pixel phases, and of generating each of the subsampled images as the video data, and

(d) the fourth video processing of performing the subsampling processing of separating the predetermined unit image into the subsampled images in accordance with pixel phases, and of generating the video data by compressing each of the subsampled images; and

an output module configured to output transmission data comprising a frame number of the predetermined unit image, coordinate information of the predetermined unit image, information for identifying whether the video data has been subsampled or not, pixel phase information of the video data when the subsampling processing has been performed on the video data, information for identifying whether the video data has been compressed or not, size information of the video data, and the video data.

2. The apparatus of claim 1, wherein the transmission data comprises subsampling-processing identification information for identifying content of the subsampling processing.

3. The apparatus of claim 2, wherein the subsampling processing generates two subsampled images by separating pixels in the predetermined unit image into even-numbered and odd-numbered columns or into first and second phases of a checker board pattern.

4. The apparatus of claim 3, wherein the video data further comprises information for identifying a compression scheme of the video data when the second or fourth video processing has been preformed.

5. An image reception apparatus comprising:

an input module configured to input transmission data comprising a frame number of a predetermined unit image, coordinate information of the predetermined unit image, information for identifying whether video data has been subsampled or not, pixel phase information of the video data when a subsampling processing has been performed on the video data, information for identifying whether the video data has been compressed or not, size information of the video data, and the video data;

an extraction module configured to extract the video data from the transmission data, in accordance with the size information of the video data;

a decompression module configured to decompresses the video data when the information for identifying whether the video data has been compressed or not indicates that a compression processing has been performed on the video data;

an inverse subsampling module configured to reconstruct the predetermined unit image by performing an inverse subsampling processing on the video data in accordance with the pixel phase information when the information for identifying whether the video data has been subsampled or not indicates that the subsampling processing has been performed on the video data;

a display-area determination module configured to determine a display area of the predetermined unit image, based on the coordinate information of the predetermined unit image; and

a display-order determination module configured to determine a display frame of the predetermined unit image, based on the frame number of the predetermined unit image.

6. The apparatus of claim 5, wherein compressed data of an image block comprises an identifier of a compression scheme, and

the decompression module is configured to select an decompression scheme in accordance with the identifier of the compression scheme to decompress the compressed data of the image block.

7. An image transmission apparatus comprising:

an image input module configured to input a predetermined unit image obtained by dividing an input image;

a format converter configured to perform reduction conversion in horizontal direction for each signal component of the predetermined unit image;

a pixel separation module configured to perform pixel separation in horizontal direction on the predetermined unit image subjected to the reduction conversion;

a compression module configured to obtain compressed image data by compressing the predetermined unit image subjected to the pixel separation, independently for each separated pixel phase;
a packetizing module configured to packetize the compressed image data; and
a transmitter configured to transmit packetized compressed image data, wherein
the apparatus transmits (1) the compressed image data, (2) information of a color space of the input image, (3) information of a horizontal reduction rate for the compressed image data, (4) information of a pixel separation type for the compressed image data, and (5) information of a pixel separation phase for the compressed image data.

8. The apparatus of claim 7, wherein the information of the pixel separation type indicates any of (1) pixel separation into even-numbered and odd-numbered pixels, (2) pixel separation into first and second phases of a checker board pattern, and (3) separation into left and right halves of the predetermined unit image.

9. An image reception apparatus comprising:

a receiver configured to receive a plurality of packets comprising (1) compressed image data of a predetermined unit image obtained by dividing an input image or an image obtained by performing pixel separation in horizontal direction on the predetermined unit image, (2) information of a color space of the input image, (3) information of a horizontal reduction rate for the compressed image data, (4) information of a pixel separation type for the compressed image data, and (5) information of a pixel separation phase for the compressed image data;
a depacketizing module configured to extract the information (1) to (5) from the plurality of packets;
a decompression module configured to decompress the compressed image data;
a pixel composition module configured to perform horizontal pixel composition of decompressed images, in accordance with the information of the pixel separation type and the information of the pixel separation phase;
a format converter configured to horizontally enlarge an image obtained by the horizontal pixel composition in accordance with the information of the horizontal reduction rate, for each signal component; and
an image output module configured to output an image subjected to format conversion.

10. The apparatus of claim 9, wherein the information of the pixel separation type indicates any of (1) pixel separation into even-numbered and odd-numbered pixels, (2) pixel separation into first and second phases of a checker board pattern, and (3) separation into left and right halves of the predetermined unit image.

11. An image transmission apparatus comprising:

a division module configured to divide an input image frame into units of slices;
a compression module configured to generate compressed image data by performing closed compression for each of the units of slices;
a packetizing module configured to packetize

(1) the compressed image data,
(2) color space information indicating which of RGB, YCbCr444, and YCbCr422 a color space of the input image frame is,
(3) frame size information of the input image frame,
(4) separation information indicating whether each of the slices is a predetermined unit image in the input image frame or one of two partitions into which the predetermined unit image has been separated,
(5) frame number information indicating a frame number to which each of the slices belongs,
(6) display position information indicating a position where each of the slices is to be displayed in the frame,
(7) pixel-separation type information indicating which of pixel separation modes bases the partition which each of the slices is, the pixel separation modes being

(A) a pixel separation mode of separating the predetermined unit image into pixels in even-numbered columns and odd-numbered columns,
(B) a pixel separation mode of separating the predetermined unit image into pixels in first and second phases of a checker board pattern, and
(C) a pixel separation mode of separating the predetermined unit image into a left half image and a right half image,

(8) partition number information indicating which one of the two partitions each of the slices is, and
(9) horizontal subsampling-rate information indicating a horizontal subsampling rate of each signal component of the predetermined unit image,

to generate a packetized data signal; and
a transmitter configured to OFDM-modulate the packetized data signal and transmit the packetized data signal on a wireless transmission channel within a frequency range of 57 GHz to 66 GHz.

12. An image reception apparatus comprising:

a receiver configured to receive a plurality of packet data by OFDM-demodulating a packetized data signal received on a wireless transmission channel within a frequency range of 57 GHz to 66 GHz;
a depacketizing module configured to depacketize

(1) image data compressed in units of slices,
(2) color space information indicating which of RGB, YCbCr444, and YCbCr422 a color space of a frame of the image data is,
(3) frame size information of the frame,
(4) separation information indicating whether each of the slices is a predetermined unit image in the frame or one of two partitions into which the predetermined unit image has been separated,
(5) frame number information indicating a frame number of the frame to which each of the slices belongs,
(6) display position information indicating a position where each of the slices is to be displayed in the frame,
(7) pixel-separation type information indicating which of pixel separation modes bases the partition which each of the slices is, the pixel separation modes being

(A) a pixel separation mode of separating the predetermined unit image into pixels in even-numbered columns and odd-numbered columns,
(B) a pixel separation mode of separating the predetermined unit image into pixels in first and second phases of a checker board pattern, and
(C) a pixel separation mode of separating the predetermined unit image into a left half image and a right half image,

(8) partition number information indicating which one of the two partitions each of the slices is, and
(9) horizontal subsampling-rate information indicating a horizontal subsampling rate of each signal component of the predetermined unit image; and

a reconstruction module configured to decompresses the image data and reconstruct the predetermined unit image, based on the information (1) to (9).

100

104

Division
module

Video
processor

Output
module

105

101

102

103

# FIG. 1

206      207   102

201

First video
processor

202

Second video
processor

205

208

203

Third video
processor

204

Fourth video
processor

# FIG. 2

F I G. 3

F I G. 4

F I G. 5

F I G. 6

F I G. 7

Image width

| Predetermined unit image #0 | Predetermined unit image #1 |
| Predetermined unit image #2 | Predetermined unit image #3 |
| Predetermined unit image #4 | |

Height
16 pixels

Image
height

············

F I G. 8

F I G. 9A

F I G. 9B

| Frame number of predetermined unit image | Coordinate information of predetermined unit image | Information for identifying subsampled/ non-subsampled | Pixel phase information of subsampling | Information for identifying compressed/ uncompressed |
|---|---|---|---|---|
| Size information of video data | Video data | | | |

FIG. 10

FIG. 11A

FIG. 11B

Total size

| Total size information | Predetermined size information | Compressed data for image block #1 | Compressed data for image block #2 | | Compressed data for image block #n |
|---|---|---|---|---|---|

Predetermined size / Predetermined size / Predetermined size

F I G. 12

Total size

| Total size information | Predetermined size information | Compressed data for image block #1 | Compressed data for image block #2 | | Compressed data for image block #n |
|---|---|---|---|---|---|

Predetermined size / Predetermined size / Predetermined size

| Compression scheme identifier | Compressed data |
|---|---|

F I G. 13

Total size

Predetermined
size

Predetermined
size

Predetermined
size

| Total size information | Predetermined size information | Compressed data for image block #1 | Compressed data for image block #2 | | Compressed data for image block #n |
|---|---|---|---|---|---|

| Compressed data | Predetermined bit pattern (00000...) |
|---|---|

Padding area

F I G. 14

11 → Image input module (12) → Format converter (13) → Pixel separation module (14) → Compression module (15) → Packetizing module (16) → Transmitter (17) → 18

19

20

F I G. 15

21 → Receiver (22) → De-packetizing module (23) → Decompression module (24) → Pixel composition module (25) → Format converter (26) → Image output module (27) → 28

30

29

F I G. 16

Packetization | Header | Data | Header | Data | ---- | Header | Data

Compressed slice data unit | Slice header | Slice

# FIG. 17

| Data field | Size [bits] |
|---|---|
| partition_type | 2 |
| h_subsampling | 2 |
| Reserved | 4 |

# FIG. 18

| partition_type | Description |
|---|---|
| 0 | Horizontal left/right division or no pixel separation |
| 1 | Horizontal even/odd pixel separation |
| 2 | Checkerboard-type pixel separation |

# FIG. 19

| h_subsampling | Description |
|:---:|:---|
| 0 | No reduction |
| 1 | Horizontal 1/2 reduction of color differential signal |
| 2 | Horizontal 1/2 reduction of all components |

## F I G. 20

| Frame width /2 | Frame width /2 |
|:---:|:---:|
| Partition 0 | Partition 1 |

8 lines

## F I G. 21

F I G. 22

F I G. 23

| Data field | Size [bits] |
|:---:|:---:|
| SliceIndex | 10 |
| - - - - - - - - | |

F I G. 24

| Data field | Size [bits] |
|:---:|:---:|
| ColorSpace | 2 |
| PartitionEnable | 1 |
| VideoFrameSizeInfo | n |
| - - - - - - - - - | |

F I G. 25

| ColorSpace | Description |
|:---:|:---:|
| 0 | RGB |
| 1 | YCbCr422 |
| 2 | YCbCr444 |

F I G. 26

| PartitionEnable | Description |
|---|---|
| 0 | Pixel separation off |
| 1 | Pixel separation on |

F I G. 27

| h_subsampling | ColorSpace | | |
|---|---|---|---|
| | RGB | YCbCr422 | YCbCr444 |
| 0 | RGB | YCbCr422 | YCbCr444 |
| 1 | —— | —— | YCbCr422 |
| 2 | RGB | YCbCr422 | YCbCr444 |

F I G. 28

| h_subsampling | ColorSpace | | |
|---|---|---|---|
| | RGB | YCbCr422 | YCbCr444 |
| 0 | 6 | 4 | 6 |
| 1 | —— | —— | 4 |
| 2 | 3 | 2 | 3 |

F I G. 29

F I G. 30

F I G. 31

Vertical frequency

Horizontal frequency

F I G. 32A

Vertical frequency

Horizontal frequency

F I G. 32B

Subjective image quality

RGB 4:4:4
YCbCr 4:4:4
YCbCr 4:2:2
YCbCr 2:2:2
YCbCr 2:1:1

Transmission rate

F I G. 33

## INTERNATIONAL SEARCH REPORT

| | International application No. |
|---|---|
| | PCT/JP2009/066832 |

**A. CLASSIFICATION OF SUBJECT MATTER**
*H04N7/26*(2006.01)i

According to International Patent Classification (IPC) or to both national classification and IPC

**B. FIELDS SEARCHED**

Minimum documentation searched (classification system followed by classification symbols)
H04N7/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-224044 A (Sony Corp.), 17 August 2001 (17.08.2001), paragraphs [0010] to [0028], [0089] to [0091]; fig. 2, 19 (Family: none) | 7-10 |
| A | JP 2004-040517 A (Hitachi, Ltd.), 05 February 2004 (05.02.2004), entire text; all drawings (Family: none) | 1-12 |
| A | JP 09-233467 A (Fujitsu Ltd.), 05 September 1997 (05.09.1997), entire text; all drawings & US 5968132 A | 1-12 |

[X] Further documents are listed in the continuation of Box C.　　　[ ] See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 December, 2009 (10.12.09) | 22 December, 2009 (22.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| | International application No. |
|---|---|
| | PCT/JP2009/066832 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 07-123132 A  (Canon Inc.), 12 May 1995 (12.05.1995), entire text; all drawings & US 5761438 A | 1-12 |
| A | JP 2001-160969 A  (Matsushita Electric Industrial Co., Ltd.), 12 June 2001 (12.06.2001), entire text; all drawings (Family: none) | 1-12 |
| A | JP 09-037241 A  (NEC Engineering, Ltd.), 07 February 1997 (07.02.1997), entire text; all drawings (Family: none) | 1-12 |
| A | JP 08-307699 A  (Kokusai Electric Co., Ltd.), 22 November 1996 (22.11.1996), entire text; all drawings (Family: none) | 1-12 |
| A | JP 02-312476 A  (Mitsubishi Electric Corp.), 27 December 1990 (27.12.1990), entire text; all drawings & US 5130797 A | 1-12 |

Form PCT/ISA/210 (continuation of second sheet) (April 2007)

## INTERNATIONAL SEARCH REPORT

<table>
<tr><td>International application No.</td></tr>
<tr><td>PCT/JP2009/066832</td></tr>
</table>

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
     See extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.

PCT/JP2009/066832

Continuation of Box No.III of continuation of first sheet(2)

The inventions of claims 1 to 6 relate to an image transmitting apparatus in which any one processing is selected from among first to fourth video processings and an image is compressed and outputted and an image receiving apparatus corresponding to the image transmitting apparatus.

The inventions of claims 7 to 10 relate to an image transmitting apparatus in which contractive image transformation and pixel isolation are performed and pixel-isolated images are independently compressed and outputted and an image receiving apparatus corresponding to the image transmitting apparatus.

The inventions of claims 11 and 12 relate to an image transmitting apparatus in which an image is divided, compressed, and supplied with various information and the packeted image is transmitted and an image receiving apparatus corresponding to the image transmitting apparatus.

Therefore, these three groups of inventions are not considered to be so linked as to form a single general inventive concept.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0622288 B

- JP H1118086 B